# EUROPEAN PATENT APPLICATION

(11) **EP 4 765 408 A1**
(43) Date of publication of application: **24.06.2026**
(21) Application number: 24855671.4
(22) Date of filing: 14.08.2024
(51) Int. Cl.: H01M 50/30, H01M 50/204

(54) **BATTERY, ELECTRIC DEVICE AND ENERGY STORAGE DEVICE**

(30) Priority: 22.08.2023 CN 202311062054
(71) Applicant: Contemporary Amperex Technology Co., Limited, Ningde, Fujian 352100 (CN)
(72) Inventor: LIN, Jiubiao, Ningde, Fujian 352100 (CN); ZHOU, Linggang, Ningde, Fujian 352100 (CN)
(74) Representative: Ran, Handong
(86) International application number: PCT/CN2024/111963
(87) International publication number: WO 2025/039945

(57) **Abstract**

Disclosed in the embodiments of the present application are a battery, an electric device and an energy storage device. The battery comprises: a case; battery cells, which are accommodated in the case, wherein the battery cells are provided with a pressure relief mechanism; and a discharge channel, wherein one end of the discharge channel is arranged around the pressure relief mechanism, and the discharge channel is configured in such a way that emissions are discharged from the pressure relief mechanism and are discharged to the outside of the case via the other end of the discharge channel. The battery, the electric device and the energy storage device provided in the embodiments of the present application can improve the stability and reliability of the battery.

## Description

### CROSS-REFERENCE TO RELATED APPLICATIONS

This application claims priority to Chinese Patent Application No. 202311062054.6 filed on August 22, 2023 and entitled "BATTERY, ELECTRIC DEVICE, AND ENERGY STORAGE DEVICE," the entire content of which is incorporated herein by reference.

### TECHNICAL FIELD

This application relates to the field of batteries, and more particularly, to a battery, an electric device, and an energy storage device.

### BACKGROUND

With the continuous advancement of battery technology, various new energy industries utilizing batteries as energy storage devices have experienced rapid development. In the development of battery technology, in addition to improving battery performance, safety issues are also a critical concern. If the safety of a battery cannot be ensured, the battery becomes unusable. Therefore, how to enhance battery safety is an urgent technical problem to be addressed in the battery technology.

### SUMMARY

An embodiment of this application provides a battery, an electric device, and an energy storage device capable of improving the stability and reliability of the battery.

According to a first aspect, a battery is provided. The battery includes: a case; a battery cell accommodated in the case, the battery cell being provided with a pressure relief mechanism; and a discharge channel, one end of the discharge channel being disposed around the pressure relief mechanism, and the discharge channel being configured to discharge emissions discharged from the pressure relief mechanism to an exterior of the case through the other end of the discharge channel.

Therefore, in the battery of the embodiments of this application, with one end of the discharge channel disposed around the pressure relief mechanism, the discharge channel can discharge the emissions discharged from the pressure relief mechanism to the exterior of the case through the other end of the discharge channel. Specifically, when thermal runaway occurs in the battery cell, after passing through the pressure relief mechanism, emissions from the battery cell are directly discharged into the discharge channel, and then the emissions are discharged to the exterior of the case through the other end of the discharge channel, reducing the impact of the high-temperature and high-pressure emissions on other components inside the case. For example, considering that the high-temperature and high-pressure emissions may include conductive particles, these particles may cause short circuits between multiple components inside the case, potentially leading to further fires or explosions. Discharging these emissions to the exterior of the case can reduce further impact on the battery, lower the risk of explosion, and improve the reliability and stability of the battery.

In some embodiments, the discharge channel is not in communication with an internal space of the battery. When thermal runaway occurs in the battery cell, emissions from the battery cell are discharged out of the battery cell through the pressure relief mechanism. Since the discharge channel is not in communication with the internal space of the battery, the emissions entering the discharge channel have small impact on other components located in the internal space of the battery. The emissions in the discharge channel can be discharged to the exterior of the case through the other end of the discharge channel, reducing further impact of the emissions on the battery, lowering the risk of explosion, and improving the reliability and stability of the battery.

In some embodiments, the battery includes: a guide member, the discharge channel being disposed on the guide member, the pressure relief mechanism being located on a first wall of the battery cell, the first wall facing towards a case wall of the case, and at least a portion of the guide member being located between the first wall and the case wall. In this way, since the length of the discharge channel included in the guide member is relatively small, the path of the high-temperature and high-pressure emissions in the discharge channel is short. This first can reduce the impact of the emissions on the guide member and components disposed around the guide member, and second can allow the emissions to be discharged out of the case as quickly as possible through the discharge channel.

In some embodiments, the case wall is provided with a first through-hole, and the guide member penetrates the case wall through the first through-hole. Since the guide member penetrates the case wall, emissions entering the discharge channel can be directly discharged to the exterior of the case along the guide member, reducing the impact of the emissions on components inside the case.

In some embodiments, the guide member is connected to the case wall in a sealed manner. This first can enhance the sealing performance of the case during normal use of the battery, and second can reduce the risk of the emissions discharged through the pressure relief mechanism entering the interior of the case through a gap between the guide member and the case wall after entering the discharge channel of the guide member during thermal runaway of the battery cell, thereby reducing the impact or even damage of these emissions on the internal structure of the case. Additionally, it can also reduce the risk of emissions discharged to the exterior of the case re-entering the case through the gap between the guide member and the case wall, thereby lowering the risk of thermal propagation inside the battery.

In some embodiments, the guide member is detachably connected to the case wall to facilitate installation and maintenance. For example, when a partial structure of the guide member or the case is damaged, the guide member can be detached from the case, and only the guide member or only the case is replaced.

In some embodiments, the guide member is connected to the case wall through a snap-fit structure, which is simple in structure and easy to implement.

In some embodiments, the snap-fit structure includes a first protruding structure and a second protruding structure that protrude from an outer periphery of the guide member, and the case wall is disposed between the first protruding structure and the second protruding structure. By clamping the case wall with the first protruding structure and the second protruding structure, the guide member and the case wall are fixed, providing a simple structure that is easy to implement.

In some embodiments, the snap-fit structure includes a pressure ring disposed around a circumference of the guide member, and the pressure ring is located between the second protruding structure and the case wall. By providing the pressure ring between the case wall and the second protruding structure, the pressure on the case wall can be increased, allowing the pressure ring, the second protruding structure, and the first protruding structure to cooperate to clamp the case wall, and further improving structural stability and strength.

In some embodiments, the pressure ring has a notch, the notch being configured to allow the pressure ring to be sleeved onto the outer periphery of the guide member through the notch to clamp the case wall. This facilitates installation and improves structural stability.

In some embodiments, an orthographic projection of the second protruding structure along a first direction does not overlap with an orthographic projection of the case wall along the first direction, the first direction being a thickness direction of the first wall. In this way, when the guide member is inserted through the first through-hole of the case wall, the second protruding structure does not obstruct the case wall, improving the installation efficiency between the case wall and the guide member.

In some embodiments, a first sealing gasket is disposed between the first protruding structure and the case wall to enhance the sealing performance between the case wall and the first protruding structure.

In some embodiments, the first protruding structure is located inside the case, and the second protruding structure is located outside the case, facilitating the installation of the guide member and the case.

In some embodiments, the guide member and the case wall are integrally formed, which can improve the structural stability between the guide member and the case wall and enhance processing and assembly efficiency.

In some embodiments, the battery further includes an insulating plate, where the insulating plate is located between a first wall of the battery cell and a case wall of the case, the discharge channel penetrates the insulating plate, and the first wall is provided with the pressure relief mechanism. Configuring the discharge channel to penetrate the insulating plate can reduce mutual interference between the insulating plate and the discharge channel. For example, the insulating plate does not obstruct the discharge channel, thereby allowing emissions in the discharge channel to be discharged promptly and improving structural stability.

In some embodiments, the battery further includes an insulating plate located between the first wall and the case wall, and the discharge channel penetrates the insulating plate; where the insulating plate and the guide member are integrally formed; or the insulating plate and the guide member are separately provided, the insulating plate being provided with a second through-hole, and the guide member penetrating the insulating plate through the second through-hole. Configuring the insulating plate and the guide member as an integrally formed structure can simplify the structure, facilitate installation, and improve the processing efficiency of the battery. Alternatively, the insulating plate and the guide member can be separately provided, which can reduce the processing difficulty of the insulating plate, allowing for more flexible connection and fixation between the insulating plate and the guide member, thereby enhancing structural flexibility.

In some embodiments, the battery further includes: a busbar component, where the busbar component is electrically connected to an electrode terminal disposed on the first wall of the battery cell, and the insulating plate is configured to support the busbar component. By supporting the busbar component with the insulating plate, the insulating plate and the busbar component are fixed to the battery cell, improving the stability of the busbar component and, consequently, enhancing the structural stability of the battery.

In some embodiments, an end of the guide member facing towards the first wall abuts the first wall, and a second sealing gasket is disposed between the guide member and the first wall. The guide member and the first wall abutting each other with the second sealing gasket disposed therebetween can enhance the sealing performance between the guide member and the first wall, and can reduce the amount of emissions discharged through the pressure relief mechanism that pass through a gap between the guide member and the first wall, thereby reducing the impact of emissions on other components disposed on the first wall.

In some embodiments, the guide member and the first wall are integrally formed. This first can simplify the structure and improves the processing efficiency of the battery, and second can enhance the sealing performance between the guide member and the first wall, allowing emissions discharged through the pressure relief mechanism to directly enter the discharge channel and then be discharged from the case, thereby reducing the impact of emissions on components inside the case.

In some embodiments, the first wall is provided with a pressure relief hole, the pressure relief mechanism covers the pressure relief hole, the first wall is provided with a third protruding structure around the pressure relief hole, and the guide member is disposed around an outer side of the third protruding structure. The third protruding structure can be used to position the guide member, reduce mutual interference between the guide member and the third protruding structure, and improve the efficiency of installation and fixation of the guide member.

In some embodiments, an end of the discharge channel is covered with a protective layer. During normal use of the battery, the protective layer can keep the discharge channel relatively sealed, reducing the impact of the exterior of the case on the discharge channel and improving the stability of the discharge channel.

In some embodiments, an end of the discharge channel is covered with a protective layer, and the protective layer is connected to the guide member to facilitate installation and improve the stability of the protective layer.

In some embodiments, the protective layer is configured to be destroyed by the emissions to discharge the emissions from the discharge channel, reducing obstruction by the protective layer on the emissions and improving the discharge efficiency of the emissions.

In some embodiments, the battery includes a plurality of battery cells, and one discharge channel is disposed corresponding to pressure relief mechanisms of the plurality of battery cells to simplify the structural complexity of the battery.

In some embodiments, the battery includes a plurality of battery cells and a plurality of discharge channels, and the pressure relief mechanisms of the plurality of battery cells correspond one-to-one with the plurality of discharge channels. In this way, when thermal runaway occurs in any one of the battery cells, a corresponding discharge channel is provided to promptly discharge the emissions from that battery cell. Moreover, since the discharge channel corresponds to only one battery cell, the impact of the emissions on other battery cells can be reduced, lowering the risk of thermal propagation in the battery and improving the reliability of the battery.

In some embodiments, the case includes a first case portion and a second case portion, the first case portion and the second case portion being connected in a sealed manner to form a hollow structure inside the case for accommodating a plurality of battery cells.

In some embodiments, the battery further includes a protective cover connected to the case and forming a passage with the case, the protective cover being provided with a discharge port, and the emissions discharged from the discharge channel being discharged to an exterior of the battery through the passage and the discharge port. This can allow the position of the discharge port to be reasonably set based on the actual application scenario of the battery, enabling directional discharge of emissions from the discharge port and reducing the impact of emissions on other components outside the battery.

According to a second aspect, an electric device is provided, including the battery according to the first aspect or any one of the embodiments of the first aspect, the battery being configured to supply power to the electric device.

In some embodiments, the electric device is a vehicle, a vessel, or a spacecraft.

In some embodiments, the electric device includes a vehicle, where the other end of the discharge channel is configured to discharge the emissions towards a bottom of the vehicle; and/or a blocking member is disposed between the case and the vehicle, the blocking member being disposed between an outlet of the discharge channel and a passenger compartment of the vehicle. Configuring the end of the discharge channel of the battery to face towards the bottom of the vehicle and be away from the passenger compartment allows emissions discharged from the discharge channel of the battery to be discharged towards the bottom of the vehicle, away from the passenger compartment, reducing the impact of emissions on the passenger compartment and improving the reliability of the vehicle. Alternatively, the blocking member disposed can also be used to block emissions discharged through the discharge channel, reducing the impact of emissions on the passenger compartment and improving the reliability of the vehicle.

According to a third aspect, an energy storage device is provided, including the battery according to the first aspect or any one of the embodiments of the first aspect, the energy storage device being configured to store a plurality of batteries.

In some embodiments, the energy storage device further includes: a cabinet, where the cabinet is configured to accommodate a plurality of batteries, a protective cover and a discharge pipeline being disposed outside the case, one end of the discharge pipeline being connected to the protective cover, the other end of the discharge pipeline being in communication with an exterior of the cabinet, the discharge pipeline being in communication with the discharge channel, and the discharge pipeline being configured to discharge emissions discharged from the discharge channel to the exterior of the cabinet. If thermal runaway occurs in a battery within the energy storage device, emissions discharged from the discharge channel of the battery can enter the protective cover and be discharged from the cabinet through the discharge pipeline, reducing the impact of emissions on other batteries in the energy storage device and improving the structural stability and reliability of the energy storage device.

### BRIEF DESCRIPTION OF DRAWINGS

FIG. 1 is a schematic diagram of a partial structure of a battery according to an embodiment of this application.
FIG. 2 is a schematic diagram of a partial exploded structure of a battery according to an embodiment of this application.
FIG. 3 is a schematic diagram of a partial cross-sectional structure of a battery according to an embodiment of this application.
FIGs. 4 to 9 are schematic diagrams of partial cross-sectional structures of batteries according to different embodiments of this application, respectively.
FIG. 10 is a schematic diagram of a structure of a pressure ring according to an embodiment of this application.
FIG. 11 is a schematic top view of a guide member and a first through-hole according to an embodiment of this application.
FIG. 12 is a schematic diagram of a partial exploded structure of a guide member according to an embodiment of this application.
FIG. 13 is a schematic diagram of another partial exploded structure of a guide member according to an embodiment of this application.
FIG. 14 is a schematic diagram of a partial cross-sectional structure of a guide member according to an embodiment of this application.
FIG. 15 is a schematic diagram of another structure of a battery according to an embodiment of this application.
FIG. 16 is a schematic diagram of a structure of a vehicle according to an embodiment of this application.
FIG. 17 is a schematic diagram of a structure of an energy storage device according to an embodiment of this application.

### DESCRIPTION OF EMBODIMENTS

The technical solutions in the embodiments of this application will be described below with reference to the accompanying drawings.

To make the objectives, technical solutions, and advantages of the embodiments of this application clearer, the technical solutions in the embodiments of this application will be clearly described below with reference to the drawings in the embodiments of this application. It is apparent that the described embodiments are some, but not all, embodiments of this application. Based on the embodiments in this application, all other embodiments obtained by a person of ordinary skill in the art without creative efforts shall fall within the scope of protection of this application.

Unless otherwise defined, all technical and scientific terms used in this application have the same meanings as commonly understood by those skilled in the technical field of this application. The terms used in the specification of this application are for the purpose of describing specific embodiments only and are not intended to limit this application. The terms "including" and "having" and any variations thereof in the specification, claims, and the above description of the drawings of this application are intended to cover non-exclusive inclusion. The terms "first," "second," and the like in the specification, claims, or the above description of the drawings of this application are used to distinguish different objects and are not intended to describe a specific order or primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. It is explicitly and implicitly understood by those skilled in the art that the embodiments described in this application may be combined with other embodiments.

In the description of this application, it should be noted that, unless otherwise explicitly specified and limited, the terms "install," "connect," "connection," and "attach" should be understood in a broad sense, for example, as a fixed connection, a detachable connection, or an integral connection; and a direct connection, an indirect connection through an intermediate medium, or an internal communication between two elements. For a person of ordinary skill in the art, the specific meanings of the above terms in this application can be understood according to specific circumstances.

The term "and/or" in this application is merely an associative relationship describing associated objects, indicating that three relationships may exist. For example, A and/or B may indicate: A alone, A and B together, and B alone. Additionally, the character "/" in this application generally indicates an "or" relationship between the associated objects before and after it.

In the embodiments of this application, the same reference numerals denote the same components, and for brevity, detailed descriptions of the same components are omitted in different embodiments. It should be understood that the dimensions such as thickness, length, and width of various components in the embodiments of this application shown in the drawings, as well as the overall thickness, length, and width of an integrated device, are merely illustrative and should not constitute any limitation to this application.

The term "plurality" appearing in this application refers to two or more (including two). Similarly, "multiple groups" refers to two or more groups (including two groups), and "multiple pieces" refers to two or more pieces (including two pieces).

In the embodiments of this application, the battery cell may be a secondary battery, where a secondary battery refers to a battery cell that can be recharged to activate the active material for continued use after the battery cell is discharged.

The battery cell may be a lithium-ion battery, a sodium-ion battery, a sodium-lithium-ion battery, a lithium-metal battery, a sodium-metal battery, a lithium-sulfur battery, a magnesium-ion battery, a nickel-hydrogen battery, a nickel-cadmium battery, a lead-acid battery, or the like, and the embodiments of this application are not limited thereto.

In some implementations, the battery cell in the embodiments of this application may be a metal battery, specifically, the metal battery may include a lithium-metal secondary battery, a sodium-metal battery, a magnesium-metal battery, or the like, and the embodiments of this application are not limited thereto.

The battery cell generally includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, serving to prevent short circuits between the positive and negative electrodes while allowing active ions to pass through.

In some implementations, the battery cell further includes an electrolyte, which serves to conduct ions between the positive and negative electrodes. The type of electrolyte is not specifically limited in this application and can be selected according to requirements. The electrolyte may be liquid, gel, or solid.

In some implementations, the electrode assembly is provided with tabs, which can conduct current from the electrode assembly. The tabs include a positive tab and a negative tab.

In some implementations, the battery cell may include an outer shell. The outer shell is used to encapsulate components such as the electrode assembly and the electrolyte. The outer shell may be a steel shell, an aluminum shell, a plastic shell (for example, polypropylene), a composite metal shell (for example, a copper-aluminum composite shell), or an aluminum-plastic film. The outer shell includes a casing and a cover plate.

As an example, the battery cell may be a cylindrical battery cell, a prismatic battery cell, a pouch battery cell, or a battery cell of another shape. Prismatic battery cells include square-shell battery cells, blade-shaped battery cells, and multi-prismatic battery cells, such as hexagonal prismatic battery cells, and this application is not particularly limited thereto.

The battery mentioned in the embodiments of this application may include one or more battery cells to provide a single physical module with higher voltage and capacity. When there are multiple battery cells, the multiple battery cells are connected in series, parallel, or a combination thereof via a busbar component.

In some embodiments, the battery may be a battery module, and when there are multiple battery cells, the multiple battery cells are arranged and fixed to form a battery module.

In some embodiments, the battery may be a battery pack, the battery pack including a case and battery cells, the battery cells or battery module being accommodated in the case.

In some embodiments, the case may be part of a chassis structure of a vehicle. For example, a portion of the case may form at least a part of a floor of the vehicle, or a portion of the case may form at least a part of cross beams and longitudinal beams of the vehicle.

The development of battery technology must consider multiple design factors simultaneously, such as energy density, cycle life, discharge capacity, charge-discharge rate, and other performance parameters. Additionally, the safety of the battery must be considered. For batteries, the primary safety risks arise from the charging and discharging processes. To improve the safety performance of batteries, battery cells are generally provided with a pressure relief mechanism. The pressure relief mechanism is an element or component that is actuated to release internal pressure or temperature when the internal pressure or temperature of the battery cell reaches a predetermined threshold. The predetermined threshold can be adjusted according to different design requirements. For example, the predetermined threshold may depend on the materials of one or more of the positive electrode plate, negative electrode plate, electrolyte, and separator in the battery cell. The pressure relief mechanism may employ elements or components sensitive to pressure or temperature, that is, when the internal pressure or temperature of the battery cell reaches the predetermined threshold, the pressure relief mechanism is actuated, thereby forming a channel for releasing the internal pressure or temperature.

When thermal runaway or other abnormal conditions occur in the battery cell, high-temperature and high-pressure emissions are generated inside the battery cell. Current designs of pressure relief mechanisms primarily focus on releasing the high pressure and heat inside the battery cell, that is, discharging the emissions from the battery cell to the exterior of the battery cell. However, how to manage the discharge of these high-temperature and high-pressure emissions after they are discharged from the battery cell to avoid further safety issues for the battery is one of the problems that urgently needs to be addressed.

The embodiments of this application provide a battery and an electric device capable of addressing the above issues. The battery of the embodiments of this application includes a case, a battery cell, and a discharge channel. The battery cell is accommodated in the case and is provided with a pressure relief mechanism. One end of the discharge channel is disposed around the pressure relief mechanism, and the discharge channel is configured to discharge emissions discharged from the pressure relief mechanism to an exterior of the case through the other end of the discharge channel. In this way, when thermal runaway occurs in the battery cell, emissions from the battery cell pass through the pressure relief mechanism and are directly discharged into the discharge channel, and then discharged to the exterior of the case through the other end of the discharge channel, reducing the impact of the high-temperature and high-pressure emissions on other components inside the case. For example, considering that high-temperature and high-pressure emissions may include conductive particles, these particles may cause short circuits between multiple components inside the case, potentially leading to further fires or explosions. Discharging these emissions to the exterior of the case can reduce further impact on the battery, lower the risk of explosion, and improve the reliability and stability of the battery.

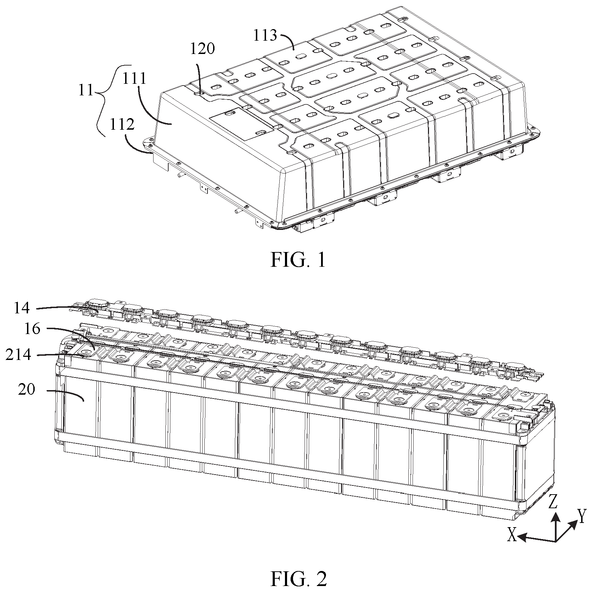

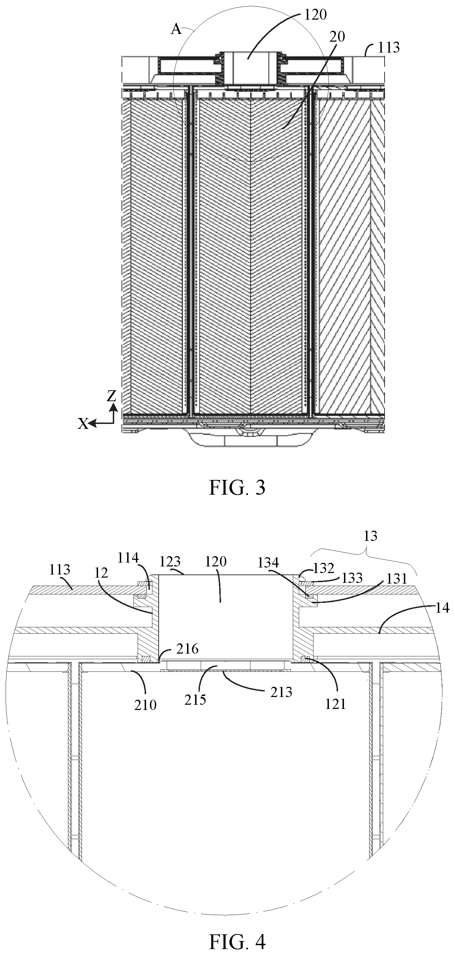

FIG. 1 illustrates a schematic diagram of a structure of a battery 10 according to an embodiment of this application. FIG. 2 illustrates a schematic diagram of a partial exploded structure of the battery 10 according to an embodiment of this application. For example, FIG. 2 may be a schematic diagram of the partial exploded structure of the battery 10 shown in FIG. 1. FIG. 3 illustrates a schematic diagram of a partial cross-sectional structure of the battery 10 according to an embodiment of this application. For example, the cross-section shown in FIG. 3 may be a schematic diagram of the partial cross-sectional structure of the battery 10 shown in FIGs. 1 and 2, the cross-section being perpendicular to a length direction Y of a battery cell 20 included in the battery 10. FIG. 4 illustrates a schematic diagram of another partial cross-sectional structure of the battery 10 according to an embodiment of this application. For example, the cross-sectional schematic diagram shown in FIG. 4 may be an enlarged schematic diagram of area A shown in FIG. 3.

As shown in FIGs. 1 to 4, the battery 10 may include: a case 11, a battery cell 20, and a discharge channel 120. The battery cell 20 is accommodated in the case 11, the battery cell 20 being provided with a pressure relief mechanism 213. One end of the discharge channel 120 is disposed around the pressure relief mechanism 213, and the discharge channel 120 is configured to discharge emissions discharged from the pressure relief mechanism 213 to an exterior of the case 11 through the other end of the discharge channel 120.

The battery 10 of the embodiment of this application may include at least one battery cell 20 to meet different power usage requirements. The plurality of battery cells 20 may be connected in series, parallel, or a combination thereof, where a combination refers to a mix of series and parallel connections. For example, a plurality of battery cells 20 may be first connected in series, parallel, or a combination to form a battery module, and a plurality of battery modules may then be connected in series, parallel, or a combination to form the battery 10. In other words, a plurality of battery cells 20 may directly form the battery 10, or they may first form a battery module, which then forms the battery 10.

The battery cell 20 of the embodiment of this application may refer to any one of the battery cells 20 included in the battery 10, and the shape of the battery cell 20 can be configured according to actual applications. For example, the battery cell 20 may be a cuboid as shown in FIGs. 1 to 4, or it may have other shapes different from those shown in FIGs. 1 to 4, such as a cylinder, and the embodiments of this application are not limited thereto.

It should be understood that, as shown in FIGs. 1 to 4, the battery 10 of the embodiment of this application may include a case 11, the case 11 being configured to accommodate at least one battery cell 20. The interior of the case 11 of the embodiment of this application is a hollow structure, with at least one battery cell 20 accommodated within the case 11. Specifically, the case 11 includes: a first case portion 111 and a second case portion 112, the first case portion 111 and the second case portion 112 being connected in a sealed manner. For example, the first case portion 111 and the second case portion 112 may be snap-fitted together to form a hollow structure. The shapes of the first case portion 111 and the second case portion 112 may be determined based on the shapes of the components accommodated therein, for example, based on the combined shape of a plurality of battery cells 20 accommodated therein.

At least one of the first case portion 111 and the second case portion 112 of the embodiment of this application has an opening. For example, as shown in FIGs. 1 to 4, only one of the first case portion 111 and the second case portion 112 may be a hollow cuboid with an opening, while the other is plate-shaped to cover the opening. Here, taking the first case portion 111 as a hollow cuboid with an opening and the second case portion 112 as plate-shaped as an example, the second case portion 112 is configured to cover the opening of the first case portion 111 to form the case 11 with a closed chamber, the chamber being configured to accommodate at least one battery cell 20. If the case 11 accommodates a plurality of battery cells 20, the plurality of battery cells 20 may be placed in the case 11 formed by the snap-fitting of the first case portion 111 and the second case portion 112 after being connected in parallel, series, or a combination.

For example, unlike what is shown in FIGs. 1 to 4, both the first case portion 111 and the second case portion 112 may be hollow cuboids, each having an opening face, with the opening of the first case portion 111 and the opening of the second case portion 112 disposed opposite each other, and the first case portion 111 and the second case portion 112 snap-fitted together to form the case 11 with a closed chamber, the chamber being configured to accommodate at least one battery cell 20.

It should be understood that the battery cell 20 of the embodiment of this application is provided with a pressure relief mechanism 213, the pressure relief mechanism 213 being an element or component that is actuated to release internal pressure or temperature when the internal pressure or temperature of the battery cell 20 reaches a predetermined threshold. The threshold design varies depending on different design requirements. The threshold may depend on the materials of one or more of the positive electrode plate, negative electrode plate, electrolyte, and separator in the battery cell 20.

The term "actuate" mentioned in this application refers to the pressure relief mechanism 213 performing an action or being activated to a certain state, thereby allowing the internal pressure and temperature of the battery cell 20 to be released. The actions performed by the pressure relief mechanism 213 may include, but are not limited to: at least a portion of the pressure relief mechanism 213 rupturing, shattering, tearing, or opening, and the like. When the pressure relief mechanism 213 is actuated, high-temperature and high-pressure substances inside the battery cell 20 are discharged as emissions from the actuated portion. In this manner, the battery cell 20 can release pressure and temperature under controlled pressure or temperature conditions, thereby avoiding potentially more serious accidents.

The emissions from the battery cell 20 mentioned in this application include, but are not limited to: electrolyte, dissolved or fragmented positive and negative electrode plates, fragments of the separator, high-temperature and high-pressure gases produced by reactions, flames, and the like.

In the embodiments of this application, one end of the discharge channel 120 is disposed around the pressure relief mechanism 213, so that when thermal runaway occurs in the battery cell 20, emissions from the battery cell 20 are discharged through the pressure relief mechanism 213 and can be directly discharged out of the battery cell 2 to enter the discharge channel 120, and then discharged to the exterior of the case 11 through the other end of the discharge channel 120, reducing the impact of the high-temperature and high-pressure emissions on other components inside the case 11. For example, considering that high-temperature and high-pressure emissions may include conductive particles, these particles may cause short circuits between multiple components inside the case 11, potentially leading to further fires or explosions. Discharging these emissions to the exterior of the case 11 can reduce further impact on the battery 10, lower the risk of explosion, and improve the reliability and stability of the battery 10.

For example, the battery 10 may further include a busbar component 16, the busbar component 16 being configured to electrically connect a plurality of battery cells 20, for example, in parallel, series, or a combination. The busbar component 16 may achieve electrical connection between battery cells 20 by connecting to electrode terminals 214 of the battery cells 20. Alternatively, the busbar component 16 may achieve electrical connection between battery cells 20 by connecting to other components of the battery cells 20. For example, the busbar component 16 may be electrically connected to a sealing structure or shell of the battery cell 20, thereby achieving electrical connection between battery cells 20. Therefore, if conductive particles in high-temperature and high-pressure emissions cannot be effectively discharged to the exterior of the case 11 in a timely manner, these conductive particles may easily cause short circuits between busbar components 16 inside the case 11, potentially leading to further fires or explosions. Discharging these emissions to the exterior of the case 11 can reduce further impact on the battery 10, lower the risk of explosion, and improve the reliability and stability of the battery 10.

It should be understood that the battery 10 of the embodiment of this application may include a plurality of battery cells 20, and for any one of the plurality of battery cells 20, the pressure relief mechanism 213 of the battery cell 20 may be correspondingly provided with one discharge channel 120. However, for any discharge channel 120 included in the battery 10, the discharge channel 120 may correspond to the pressure relief mechanism 213 of at least one battery cell 20.

In some embodiments, the battery 10 includes a plurality of battery cells 20 and a plurality of discharge channels 120, the pressure relief mechanisms 213 of the plurality of battery cells 20 corresponding one-to-one with the plurality of discharge channels 120. In this way, when thermal runaway occurs in any one of the battery cells 20, a corresponding discharge channel 120 is provided to promptly discharge the emissions from that battery cell 20. Moreover, since the discharge channel 120 corresponds to only one battery cell 20, the impact of the emissions on other battery cells 20 is reduced, lowering the risk of thermal propagation in the battery 10 and improving the reliability of the battery 10.

In some embodiments, the battery 10 includes a plurality of battery cells 20, and one discharge channel 120 is disposed corresponding to the pressure relief mechanisms 213 of a plurality of battery cells 20 to simplify the structural complexity of the battery 10. Specifically, the battery 10 includes a plurality of battery cells 20 and at least one discharge channel 120, where any one of the at least one discharge channel 120 satisfies: the discharge channel 120 corresponds to the pressure relief mechanisms 213 of a plurality of battery cells 20. Additionally, different discharge channels 120 included in the battery 10 may correspond to different or the same number of pressure relief mechanisms 213 of battery cells 20.

As an example, each discharge channel 120 corresponds to the pressure relief mechanisms 213 of a row or column of battery cells 20.

In this way, each discharge channel 120 can be configured to discharge emissions from at least one battery cell 20, reducing the number of discharge channels 120 included in the battery 10, simplifying the internal structure of the battery 10, and improving the processing efficiency of the battery 10.

For ease of description, the embodiments of this application mainly take as an example the case where the pressure relief mechanisms 213 of a plurality of battery cells 20 included in the battery 10 correspond one-to-one with a plurality of discharge channels 120, and any one pressure relief mechanism 213 and its corresponding discharge channel 120 are described as an example, but the embodiments of this application are not limited thereto.

In the embodiments of this application, the discharge channel 120 is not in communication with the internal space of the battery 10. Specifically, as shown in FIGs. 1 to 4, when thermal runaway occurs in the battery cell 20, emissions from the battery cell 20 are discharged out of the battery cell 20 through the pressure relief mechanism 213, and since the discharge channel 120 is not in communication with the internal space of the battery 10, the emissions entering the discharge channel 120 have minimal impact on other components (for example, the busbar component 16 and electrode terminal 214) located in the internal space of the battery 10. The emissions in the discharge channel 120 can be discharged to the exterior of the case 11 through the other end of the discharge channel 120, reducing further impact on the battery 10, lowering the risk of explosion, and improving the reliability and stability of the battery 10.

It should be understood that the discharge channel 120 not being in communication with the internal space of the battery 10 may mean that the discharge channel 120 is an independent structure, and the discharge channel 120 is isolated from other spaces in the battery 10.

In some embodiments, the discharge channel 120 may also not be in communication with some components inside the battery 10. For example, the discharge channel 120 is at least not in communication with a high-voltage connection area inside the battery 10, that is, the discharge channel 120 is at least separated from the high-voltage connection area inside the battery 10. In this way, when thermal runaway occurs in the battery cell 20, emissions from the battery cell 20 are discharged out of the battery cell 20 through the pressure relief mechanism 213 and enter the discharge channel 120. Since the discharge channel 120 is not in communication with the high-voltage connection area inside the battery 10, the impact of the emissions on the high-voltage connection area inside the battery 10 can at least be reduced, for example, reducing the entry of conductive particles in the emissions into the high-voltage connection area inside the battery 10, thereby reducing the risk of short circuits or even fires.

It should be understood that the discharge channel 120 of the embodiment of this application can be implemented in various ways. For example, the battery 10 includes: a guide member 12, the discharge channel 120 being disposed on the guide member, the pressure relief mechanism 213 being located on a first wall 210 of the battery cell 20, the first wall 210 facing towards a case wall 113 of the case 11, and at least a portion of the guide member 12 being located between the first wall 210 and the case wall 113. Specifically, as shown in FIGs. 1 to 4, disposing the guide member 12 between the first wall 210 of the battery cell 20 and the corresponding case wall 113 can make the length of the discharge channel 120 included in the guide member 12 relatively small, the path of high-temperature and high-pressure emissions in the discharge channel 120 is short. This first can reduce the impact of the emissions on the guide member 12 and components disposed around the guide member 12, and second can allow the emissions to be discharged from the case 11 as quickly as possible through the discharge channel 120.

It should be understood that the guide member 12 of the embodiment of this application is provided with the discharge channel 120. For example, the guide member 12 may be a hollow structure, such as a hollow tubular structure, with the hollow interior serving as the discharge channel 120 for transmitting emissions, but the embodiments of this application are not limited thereto.

The shape of the discharge channel 120 of the embodiment of this application can be configured according to actual applications. For example, as shown in FIGs. 1 to 4, the discharge channel 120 may be a through-hole of the guide member 12, and the cross-sectional shape of the through-hole may be polygonal, for example, rectangular, hexagonal, or octagonal, or the cross-sectional shape of the through-hole may be circular or other shapes to reduce processing difficulty.

The pressure relief mechanism 213 of the embodiment of this application is disposed on the first wall 210 of the battery cell 20, where the first wall 210 may be any one of the walls of the battery cell 20. Specifically, the battery cell 20 may be a polyhedral structure, that is, the battery cell 20 includes a plurality of walls, and the first wall 210 may be any one of the walls of the battery cell 20, for example, as shown in FIGs. 1 and 4. Herein, the first wall 210 being used as the wall with the smallest area of the battery cell 20 is used as an example, but the embodiments of this application are not limited thereto.

It should be understood that the pressure relief mechanism 213 of the embodiment of this application may be a part of the first wall 210 or may be a separate structure from the first wall 210, fixed to the first wall 210 by, for example, welding. For example, when the pressure relief mechanism 213 is a part of the first wall 210, the pressure relief mechanism 213 may be formed by providing a score on the first wall 210, and the thickness of the first wall 210 corresponding to the score is less than the thickness of another area of the pressure relief mechanism 213 excluding the score. The score is the weakest point of the pressure relief mechanism 213. When excessive gas is generated inside the battery cell 20, causing the internal pressure to rise and reach a threshold, or when heat generated by internal reactions in the battery cell 20 causes the internal temperature of the battery cell 20 to rise and reach a threshold, the pressure relief mechanism 213 may rupture at the score, causing the interior and exterior of the battery cell 20 to communicate, and gas pressure and temperature are released outward through the rupture of the pressure relief mechanism 213, thereby preventing the battery cell 20 from exploding.

For example, the pressure relief mechanism 213 may also be a separate structure from the first wall 210, and the pressure relief mechanism 213 may take the form of, for example, an explosion-proof valve, a gas valve, a pressure relief valve, or a safety valve, and may specifically adopt a pressure-sensitive or temperature-sensitive element or structure, that is, when the internal pressure or temperature of the battery cell 20 reaches a predetermined threshold, the pressure relief mechanism 213 performs an action, or a weak structure provided in the pressure relief mechanism 213 is destroyed, thereby forming an opening or channel for releasing internal pressure or temperature.

It should be understood that the case wall 113 of the embodiment of this application is the wall of the case 11 facing towards the first wall 210 of the battery cell 20, and depending on the position of the first wall 210, the case wall 113 may be any one of the walls of the case 11 of the battery 10. For example, the case wall 113 may be any one of the walls included in the first case portion 111, or it may be any one of the walls included in the second case portion 112, or the case wall 113 may refer to a wall jointly formed by the first case portion 111 and the second case portion 112 after being snap-fitted, and the embodiments of this application are not limited thereto.

It should be understood that at least a portion of the guide member 12 of the embodiment of this application being located between the first wall 210 and the case wall 113 may include: the guide member 12 being entirely disposed between the first wall 210 and the case wall 113; or a portion of the guide member 12 being located between the first wall 210 and the case wall 113. For example, at least a portion of the guide member 12 may be located outside the case 11.

In the embodiments of this application, the guide member 12 may also be disposed at other positions to improve the design flexibility of the case 11. For example, one end of the guide member 12 corresponds to the pressure relief mechanism 213 of the first wall 210, the first wall 210 facing towards the case wall 113, but the other end of the guide member 12 may correspond to another wall intersecting the case wall 113, that is, the guiding channel 120 extends from the first wall 210 towards another wall of the case 11 intersecting the case wall 113. This first prevents the discharge channel 120 from being too long, and second makes reasonable use of the internal space of the case 11, increasing the flexibility of arranging internal components of the case 11.

It should be understood that the fixing method of the guide member 12 of the embodiment of this application can be flexibly configured according to actual applications. For example, the guide member 12 may be integrally formed with other components to improve the integration of components within the case 11, simplifying the process of processing and assembling the battery 10. For another example, the guide member 12 may also be independently disposed to reduce the impact on other components.

The connection relationship between the guide member 12 and the case wall 113 of the embodiment of this application will be described below with reference to the accompanying drawings.

In some embodiments, the case wall 113 is provided with a first through-hole 114, and the guide member 12 penetrates the case wall 113 through the first through-hole 114. Since the guide member 12 penetrates the case wall 113, emissions entering the discharge channel 120 can be directly discharged to the exterior of the case 11 along the guide member 12, reducing the impact of emissions on components inside the case 11.

In some embodiments, the guide member 12 is connected to the case wall 113 in a sealed manner. This first can enhance the sealing performance of the case 11 during normal use of the battery 10, and second can reduce the risk of the emissions discharged through the pressure relief mechanism 213 entering the interior of the case 11 through a gap between the guide member 12 and the case wall 113 after entering the discharge channel 120 of the guide member 12 during thermal runaway of the battery cell 20, thereby reducing the impact or even damage of these emissions on the internal structure of the case 11. Additionally, it can also reduce the risk of emissions discharged to the exterior of the case 11 re-entering the case 11 through the gap between the guide member 12 and the case wall 113, thereby lowering the risk of thermal propagation inside the battery 10.

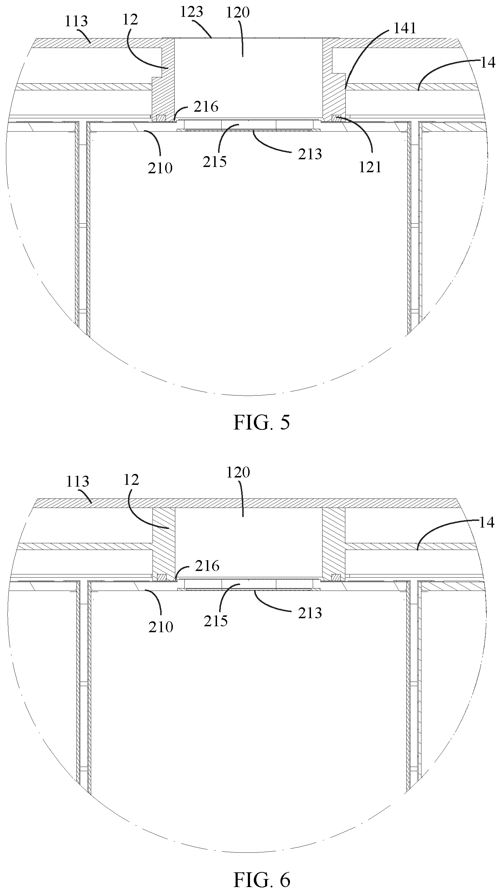

It should be understood that the sealing connection between the guide member 12 and the case wall 113 can be achieved in various ways. For example, FIG. 5 illustrates a schematic diagram of a partial cross-sectional structure of a battery 10 according to another embodiment of this application, the cross-sectional direction of FIG. 5 being consistent with that of FIG. 4, and the embodiment shown in FIG. 5 can replace the embodiment shown in FIG. 4. As shown in FIG. 5, the guide member 12 may be integrally formed with the case wall 113 to achieve a sealing connection between the guide member 12 and the case wall 113.

For another example, the case wall 113 may not be provided with a through-hole, and the guide member 12 abuts the case wall 113. FIG. 6 illustrates a schematic diagram of a partial cross-sectional structure of a battery 10 according to yet another embodiment of this application, the cross-sectional direction of FIG. 6 being consistent with that of FIG. 4 or FIG. 5, and the embodiment shown in FIG. 6 can replace the embodiment shown in FIG. 4 or FIG. 5. As shown in FIG. 6, the guide member 12 may abut the case wall 113 to achieve a sealing connection between the guide member 12 and the case wall 113. During normal use of the battery 10, the case wall 113 is relatively sealed. When the pressure relief mechanism 213 is actuated, emissions entering the discharge channel 120 can destroy the corresponding area of the case wall 113 to discharge the emissions to the exterior of the case 11.

Specifically, the sealing connection achieved by the guide member 12 abutting the case wall 113 can be implemented in various ways. For example, the guide member 12 may be connected to the case wall 113 through an adhesive to achieve a sealing connection between the guide member 12 and the case wall 113. Alternatively, the guide member 12 may be connected to the case wall 113 through welding to achieve a sealing connection between the guide member 12 and the case wall 113. Alternatively, the guide member 12 may closely abut the case wall 113, or a sealing structure 15 may be added between the guide member 12 and the case wall 113 to achieve a sealing connection between the guide member 12 and the case wall 113, and the embodiments of this application are not limited thereto.

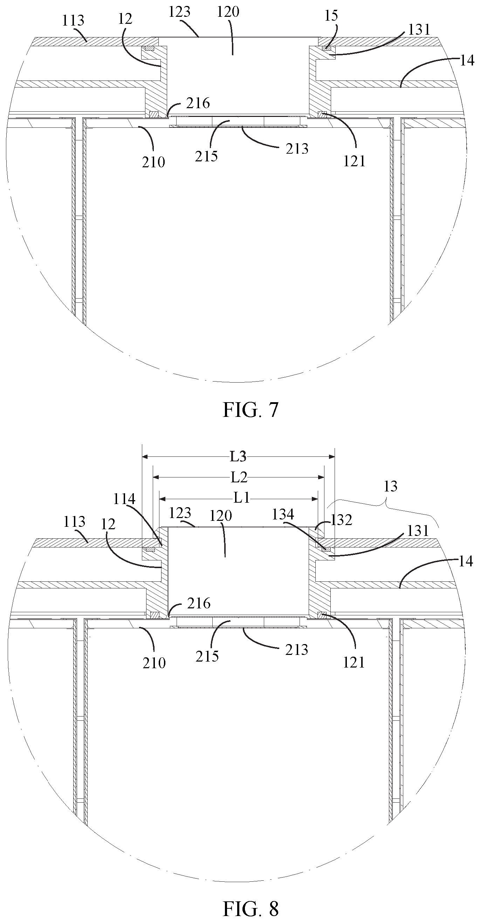

FIG. 7 illustrates a schematic diagram of a partial cross-sectional structure of a battery 10 according to yet another embodiment of this application, the cross-sectional direction of FIG. 7 being consistent with that of any one of FIGs. 4 to 6, and the embodiment shown in FIG. 7 can replace the embodiment shown in any one of FIGs. 4 to 6. As shown in FIG. 7, a sealing structure 15 is disposed between the guide member 12 and the case wall 113 to enhance the sealing performance between the guide member 12 and the case wall 113, thereby achieving a sealing connection between the guide member 12 and the case wall 113. For example, the sealing structure 15 may be clamped between the guide member 12 and the case wall 113. Alternatively, a groove structure with an opening facing towards the case wall 113 may be provided at the end of the guide member 12 facing towards the case wall 113, and the sealing structure 15 may be accommodated in the groove structure to reduce the space occupied by the sealing structure 15 inside the case 11, improving space utilization.

In some embodiments, the guide member 12 and the case wall 113 may be separately provided, that is, the guide member 12 and the case wall 113 are independently processed, which can simplify the structure of the case wall 113 and improve the structural flexibility of the case 11. For example, the guide member 12 is detachably connected to the case wall 113 to facilitate installation and maintenance. For example, when the guide member 12 or a portion of the case 11 is damaged, the guide member 12 can be detached from the case wall 113, and only the guide member 12 or only the case 11 can be replaced.

In some embodiments, the guide member 12 is connected to the case wall 113 through a snap-fit structure 13, which is simple in structure and easy to implement. For example, the snap-fit structure 13 can achieve a detachable connection between the guide member 12 and the case wall 113 to facilitate installation and maintenance.

In the embodiments of this application, the position of the snap-fit structure 13 can be flexibly configured according to actual applications. For example, the snap-fit structure 13 may be located near the case wall 113 on the guide member 12 to facilitate the connection between the guide member 12 and the case wall 113. For another example, the case wall 113 is provided with a first through-hole 114, and the guide member 12 penetrates the case wall 113 through the first through-hole 114, so the snap-fit structure 13 can be disposed on the outer side of the guide member 12 to achieve a connection between the guide member 12 and the inner wall of the first through-hole 114.

It should be understood that the structure of the snap-fit structure 13 of the embodiment of this application can be configured according to actual applications. The snap-fit structure 13 includes a first protruding structure 131 and a second protruding structure 132 that protrude from an outer periphery of the guide member 12, and the case wall 113 is disposed between the first protruding structure 131 and the second protruding structure 132. By clamping the case wall 113 with the first protruding structure 131 and the second protruding structure 132, the guide member 12 and the case wall 113 are fixed, providing a simple structure that is easy to implement.

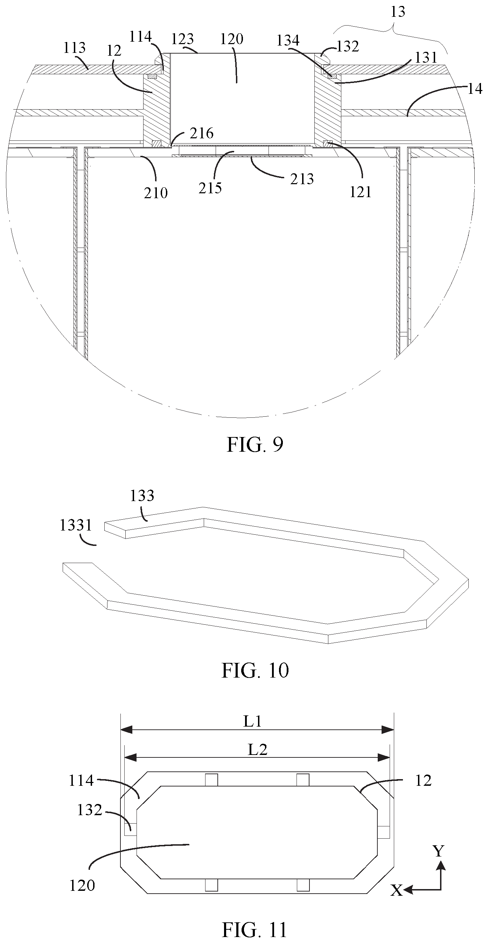

FIGs. 8 and 9 illustrate schematic diagrams of partial cross-sectional structures of a battery 10 according to different embodiments of this application, respectively, the cross-sectional directions of FIGs. 8 and 8 being consistent with that of any one of FIGs. 4 to 7, and the embodiments shown in FIGs. 8 and 9 can respectively replace the embodiment shown in any one of FIGs. 4 to 7. As shown in FIGs. 8 and 9, the outer periphery of the guide member 12 is the surface of the guide member 12 away from its internal discharge channel 120, or in other words, the outer surface of the guide member 12. The shape of the contour of the outer periphery of the guide member 12 can be flexibly configured according to actual applications. For example, the cross-sectional shape of the contour of the outer periphery of the guide member 12 may be consistent with the cross-sectional shape of the discharge channel 120. For example, it may be configured as circular, rectangular, hexagonal, or octagonal, or the cross-sectional shape of the contour of the outer periphery of the guide member 12 may be other shapes to reduce structural complexity.

In some embodiments, the first protruding structure is integrally formed with the guide member 12; and/or the second protruding structure is integrally formed with the guide member 12. Configuring the first protruding structure 131 and/or the second protruding structure 132 to be integrally formed with the guide member 12 can simplify the processing process and improve the structural stability between the first protruding structure 131 and/or the second protruding structure 132 and the guide member 12.

It should be understood that the specific implementations of the first protruding structure 131 and the second protruding structure 132 of the embodiment of this application can be configured according to actual applications. For example, to facilitate assembly, the dimensions of the first protruding structure 131 and the second protruding structure 132 can be reasonably configured based on a dimension L1 of the first through-hole 114 of the case wall 113. Specifically, as shown in FIGs. 8 and 9, along a second direction X, a dimension L3 of the first protruding structure 131 and a dimension L2 of the second protruding structure 132 are both greater than the dimension L1 of the first through-hole 114, so that the case wall 113 can be fixed between the first protruding structure 131 and the second protruding structure 132 along a thickness direction Z of the case wall 113, achieving relative stability between the guide member 12 and the case wall 113. The second direction X is perpendicular to the arrangement direction of the first protruding structure 131 and the second protruding structure 132. For example, FIGs. 8 and 9 take the second direction X as the thickness direction X of the battery cell 20 as an example, but the embodiments of this application are not limited thereto. For example, the second direction X may also be the length direction Y of the battery cell 20 or other directions.

In some embodiments, considering the installation process between the case wall 113 and the guide member 12, the first through-hole 114 of the case wall 113 needs to pass over the second protruding structure 132 to sleeve the case wall 113 onto the outer side of the guide member 12, so the dimension L2 of the second protruding structure 132 along the second direction X should not be set too large. The dimension L2 of the second protruding structure 132 along the second direction X should be slightly larger than the dimension L1 of the first through-hole 114. This first allows the second protruding structure 132 to pass through the first through-hole 114 during the installation of the case wall 113 to fix the case wall 113; and second the second protruding structure 132 can prevent the case wall 113 from detaching from the snap-fit structure 13 during use of the battery 10, improving the structural stability of the battery 10.

It should be understood that to further improve the structural stability of the snap-fit structure 13, additional components may be included.

In some embodiments, the snap-fit structure 13 includes a pressure ring 133 disposed around a circumference of the guide member 12, the pressure ring 133 being located between the second protruding structure 132 and the case wall 113. For example, taking FIG. 4 as an example, by providing the pressure ring 133 between the case wall 113 and the second protruding structure 132, the pressure on the case wall 113 can be increased, allowing the pressure ring 133, the second protruding structure 132, and the first protruding structure 131 to cooperate to clamp the case wall 113, further improving the structural stability and strength of the battery 10.

It should be understood that the shape and dimensions of the pressure ring 133 of the embodiment of this application can be flexibly configured according to actual applications. For example, the pressure ring 133 may be annular, and the pressure ring 133 has a certain deformability. When installing the pressure ring 133, the pressure ring 133 can be sleeved onto the exterior of the guide member 12 from the second protruding structure 132 and fixed between the second protruding structure 132 and the case wall 113.

In some embodiments, the pressure ring 133 has a notch 1331, the notch 1331 being configured to allow the pressure ring 133 to be sleeved onto the outer periphery of the guide member 12 through the notch 1331. FIG. 10 illustrates a schematic top view of a pressure ring 133 according to an embodiment of this application. As shown in FIG. 10, the pressure ring 133 of the embodiment of this application has a notch 1331, the notch 1331 being configured to allow the pressure ring 133 to be sleeved onto the outer peripheral surface of the guide member 12 through the notch 1331. For example, the pressure ring 133 can be inserted between the case wall 113 and a plurality of second protruding structures 132 along a direction perpendicular to the thickness direction Z of the case wall 113 through the notch 1331, thereby clamping the case wall 113, which facilitates installation and improves structural stability.

It should be understood that considering that the pressure ring 133 can further improve the structural stability between the case wall 113, the second protruding structure 132, and the first protruding structure 131, when the snap-fit structure 13 includes the pressure ring 133, the dimension L2 of the second protruding structure 132 along the second direction X can be more flexible. For example, the dimension L2 of the second protruding structure 132 along the second direction X may be greater than, equal to, or less than the dimension L1 of the first through-hole 114.

In some embodiments, an orthographic projection of the second protruding structure 132 along a first direction Z does not overlap with an orthographic projection of the case wall 113 along the first direction Z, the first direction Z being the thickness direction Z of the first wall 210. FIG. 11 illustrates a schematic partial top view of a second protruding structure 132 of a guide member 12 and a first through-hole 114 according to an embodiment of this application. For example, FIG. 11 may be a schematic diagram of the partial structure of the guide member 12 and the first through-hole 114 shown in FIGs. 1 to 4. As shown in FIG. 11, along the second direction X, a dimension L2 of the orthographic projection of the second protruding structure 132 along the first direction Z is smaller than a dimension L1 of the orthographic projection of the first through-hole 114 along the first direction Z, so that the orthographic projection of the second protruding structure 132 along the first direction Z does not overlap with the orthographic projection of the case wall 113 along the first direction Z, that is, the orthographic projection of the second protruding structure 132 along the first direction Z can be located within the projection of the first through-hole 114. In this way, when the guide member 12 is inserted through the first through-hole 114 of the case wall 113, the second protruding structure 132 does not obstruct the case wall 113, improving the installation efficiency between the case wall 113 and the guide member 12. Thereafter, the pressure ring 133 can be used to fix the guide member 12 and the case wall 113.

It should be understood that regardless of whether additional structures are added between the first protruding structure 131 and the second protruding structure 132, the specific structures of the first protruding structure 131 and the second protruding structure 132 of the embodiment of this application can be flexibly configured according to actual applications, and the first protruding structure 131 and the second protruding structure 132 may have the same or different structures to adapt to different application scenarios.

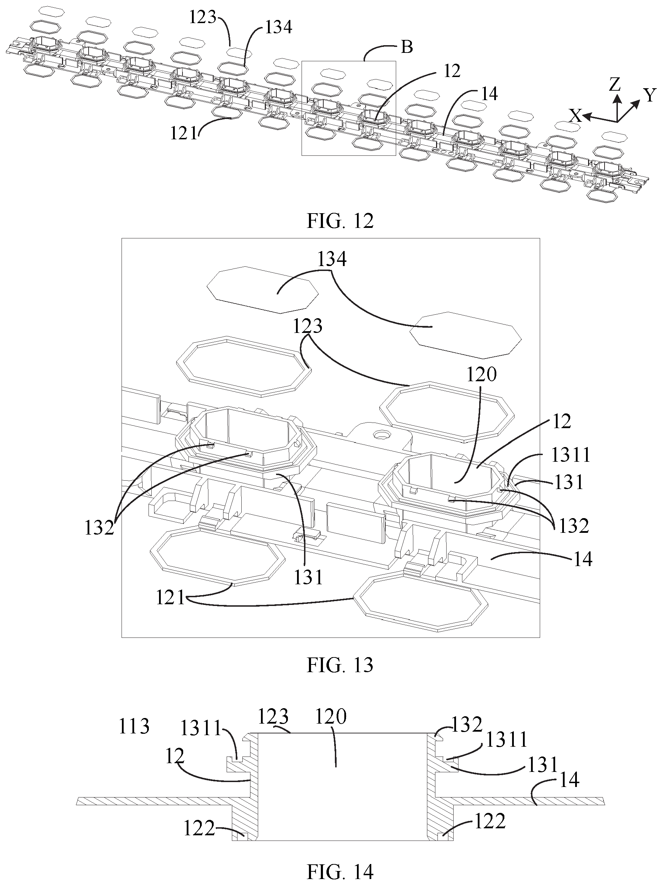

FIG. 12 illustrates a schematic diagram of a partial exploded structure of a guide member 12 according to an embodiment of this application. For example, the guide member 12 shown in FIGs. 1 to 4 is used as an example, where the pressure ring 133 is not shown in FIG. 12. FIG. 13 illustrates a schematic diagram of another partial exploded structure of a guide member 12 according to an embodiment of this application. For example, FIG. 13 is an enlarged view of area B in FIG. 12.

The snap-fit structure 13 of the embodiment of this application may include one or more second protruding structures 132. For example, the snap-fit structure 13 may include one second protruding structure 132, the second protruding structure 132 being disposed around at least a partial region of the outer periphery of the guide member 12 to facilitate processing.

For another example, as shown in FIGs. 12 and 13, the snap-fit structure 13 may include a plurality of second protruding structures. For example, the plurality of second protruding structures may be spaced apart along the circumference of the guide member 12. By providing a plurality of second protruding structures 132 distributed along the circumference of the guide member 12 to fix the case wall 113, the case wall 113 can be subjected to more uniform forces, and the weight of the connection 13 can be reduced, thereby reducing the weight of the guide member 12 and the entire battery 10. Further, the plurality of second protruding structures may be evenly spaced along the circumference of the guide member 12, so that different regions of the guide member 12 can be subjected to uniform forces, improving the structural stability of the guide member 12.

Similarly, the snap-fit structure 13 of the embodiment of this application may include one or more first protruding structures 131. Moreover, the first protruding structure 131 of the embodiment of this application may adopt the same structure as the second protruding structure 132. For example, taking the second protruding structure 132 shown in FIGs. 12 and 13 as an example, the snap-fit structure 13 may include a plurality of spaced-apart first protruding structures 131, and further, structural stability can be enhanced through another pressure ring 133.

Alternatively, the first protruding structure 131 of the embodiment of this application may adopt a different structure from the second protruding structure 132. For example, as shown in FIGs. 12 and 13, the snap-fit structure 13 may include a plurality of spaced-apart second protruding structures 132, while the first protruding structure 131 is disposed around the guide member 12 to facilitate processing and assembly. When assembling the battery 10, the guide member 12 inside the case 11 can be fixed first, and then the case wall 113 can be sleeved onto the exterior of the guide member 12 from the second protruding structure 132 towards the first protruding structure 131, allowing the case wall 113 to be relatively stably clamped above the first protruding structure 131, thereby positioning the case wall 113.

In some embodiments, a first sealing gasket 134 is disposed between the first protruding structure 131 and the case wall 113 to enhance the sealing performance between the case wall 113 and the first protruding structure 131.

FIG. 14 illustrates a schematic diagram of a partial cross-sectional structure of a guide member 12 according to an embodiment of this application. For example, FIG. 14 may be a partial schematic diagram of the guide member 12 shown in FIG. 4. As shown in FIG. 14, in some embodiments, the first protruding structure 131 is provided with a first groove 1311 with an opening facing towards the case wall 113, and at least a portion of the first sealing gasket 134 is accommodated in the first groove 1311, thereby reducing the space occupied by the first sealing gasket 134 inside the case 11 and improving the internal space of the case 11.

In the embodiments of this application, the description has mainly taken as an example the case where the first protruding structure 131 is located inside the case 11 and the second protruding structure 132 is located outside the case 11, which facilitates the installation of the case 11. Specifically, when assembling the battery 10, the guide member 12 inside the case 11 can be fixed first, and then the case wall 113 can be sleeved onto the exterior of the guide member 12 from the second protruding structure 132 towards the first protruding structure 131, allowing the case wall 113 to be relatively stably clamped above the first protruding structure 131 and below the second protruding structure 132, thereby positioning the case wall 113. However, this application does not limit the positions of the first protruding structure 131 and the second protruding structure 132. For example, the first protruding structure 131 may be disposed inside the case 11, while the first protruding structure 131 is located outside the case 11.

It should be understood that the description has mainly taken as an example the case where the guide member 12 and the case wall 113 are separately provided. In contrast, in some embodiments, the guide member 12 and the case wall 113 are integrally formed. For example, as shown in FIG. 5, which can improve the structural stability between the guide member 12 and the case wall 113 and enhance processing and assembly efficiency.

The connection relationship between the guide member 12 and an insulating plate 14 of the embodiment of this application will be described below with reference to the accompanying drawings.

In the embodiments of this application, the battery 10 further includes: an insulating plate 14 located between the first wall 210 and the case wall 113, the discharge channel 120 penetrating the insulating plate 14. Configuring the discharge channel 120 to penetrate the insulating plate 14 can reduce mutual interference between the insulating plate 14 and the discharge channel 120. For example, the insulating plate 14 does not obstruct the discharge channel 120, thereby allowing emissions in the discharge channel 120 to be discharged promptly and improving structural stability.

In some embodiments, the insulating plate 14 and the guide member 12 are integrally formed. As shown in FIGs. 12 to 14, considering that the guide member 12 typically needs to use an insulating material, configuring the insulating plate 14 and the guide member 12 as an integrally formed structure can simplify the structure, facilitate installation, and improve the processing efficiency of the battery 10.

In some embodiments, the insulating plate 14 and the guide member 12 are separately provided, the insulating plate 14 being provided with a second through-hole 141, and the guide member 12 penetrating the insulating plate 14 through the second through-hole 141. Taking FIG. 5 as an example, the insulating plate 14 and the guide member 12 can be separately provided, that is, the insulating plate 14 is independently processed and provided with the second through-hole 141, and the guide member 12 is installed by passing through the second through-hole 141, which can reduce the processing difficulty of the insulating plate 14, making the connection and fixation method between the insulating plate 14 and the guide member 12 more flexible, thereby enhancing structural flexibility.

It should be understood that the insulating plate 14 of the embodiment of this application is an insulating component disposed inside the case 11. Specifically, the battery 10 further includes: a busbar component 16 electrically connected to an electrode terminal 214 disposed on the first wall 210 of the battery cell 20, the insulating plate 14 being configured to support the busbar component 16. The busbar component 16 can achieve electrical connection between a plurality of battery cells 20 by connecting to the electrode terminals 214 of different battery cells 20. The busbar component 16 can be fixed to corresponding components of the battery cell 20 in various ways, for example, by welding or the like, and the embodiments of this application are not limited thereto. Further, the busbar component 16 can be supported by the insulating plate 14, thereby fixing the insulating plate 14 and the busbar component 16 to the battery cell 20, which can improve the stability of the busbar component 16 and, consequently, enhance the structural stability of the battery 10.

In the embodiments of this application, the pressure relief mechanism 213 is located on the first wall 210 of the battery cell 20, and a component forming the discharge channel 120 is connected to the first wall 210 in a sealed manner. After the pressure relief mechanism 213 is actuated, since the component forming the discharge channel 120 is connected to the first wall 210 in a sealed manner, emissions discharged through the pressure relief mechanism 213 can directly enter the discharge channel 120 and then be discharged from the case 11, reducing emissions entering the interior of the case 11 from between the pressure relief mechanism 213 and the discharge channel 120, thereby reducing the impact on components inside the case 11. For example, the first wall 210 where the pressure relief mechanism 213 is located may be provided with an electrode terminal 214, which can reduce the impact of emissions on the electrode terminal 214, improving the reliability of the battery 10.

It should be understood that the sealing connection between the component forming the discharge channel 120 and the first wall 210 of the embodiment of this application can be achieved in various ways. The embodiment of this application takes the guide member 12 forming the discharge channel 120 as an example, but the embodiments of this application are not limited thereto.

In some embodiments, one end of the guide member 12 facing towards the first wall 210 abuts the first wall 210, and a second sealing gasket 121 is disposed between the guide member 12 and the first wall 210. The guide member and the first wall 210 abutting each other with the second sealing gasket 121 disposed therebetween can enhance the sealing performance between the guide member 12 and the first wall 210, reducing the amount of emissions discharged through the pressure relief mechanism 213 that pass through a gap between the guide member 12 and the first wall 210, thereby reducing the impact of emissions on other components disposed on the first wall 210. For example, the first wall 210 may also be provided with an electrode terminal 214, which can reduce the impact of emissions on the electrode terminal 214, for example, reducing the risk of electrical connection and short-circuiting between electrode terminals 214 of different battery cells 20.

In some embodiments, one end of the guide member 12 facing towards the first wall 210 is provided with a second groove 122 with an opening facing towards the first wall 210, and at least a portion of the second sealing gasket 121 is accommodated in the second groove 122. This can reduce the space occupied by the second sealing gasket 121, improving the space utilization inside the case 11.

In some embodiments, the guide member 12 and the first wall 210 are integrally formed. This first can simplify the structure and improves the processing efficiency of the battery 10, and second can enhance the sealing performance between the guide member 12 and the first wall 210, allowing emissions discharged through the pressure relief mechanism 213 to directly enter the discharge channel 120 and then be discharged from the case 11, thereby reducing the impact of emissions on components inside the case 11.

It should be understood that the guide member 12 of the embodiment of this application can be disposed around the pressure relief mechanism 213. For example, the discharge channel 120 of the guide member 12 can surround the outer periphery of the pressure relief mechanism 213, so that almost all emissions discharged from the pressure relief mechanism 213 can enter the discharge channel 120 and be promptly discharged to the exterior of the case 11. The dimension of the discharge channel 120 of the guide member 12 from the outer periphery of the pressure relief mechanism 213 can be configured according to actual applications to adapt to different application scenarios.

In some embodiments, the first wall 210 is provided with a pressure relief hole 215, the pressure relief mechanism 213 covers the pressure relief hole 215, the first wall 210 is provided with a third protruding structure 216 around the pressure relief hole 215, and the guide member 12 is disposed around an outer side of the third protruding structure 216. Specifically, as shown in FIGs. 4 to 9, the third protruding structure 216 provided around the pressure relief hole 215 can be used to connect a protective piece, the protective piece being configured to protect the pressure relief mechanism 213, reducing the risk of premature failure of the pressure relief mechanism 213 during normal use of the battery cell 20 and improving the lifespan of the pressure relief mechanism 213. Moreover, the third protruding structure 216 can also increase the deformation space of the pressure relief mechanism 213, allowing the pressure relief mechanism 213 to be actuated promptly during thermal runaway of the battery cell 20 and discharge emissions in a timely manner. Disposing the guide member 12 on the outer side of the third protruding structure 216 allows the third protruding structure 216 to position the guide member 12, reduces mutual interference between the guide member 12 and the third protruding structure 216, and improves the efficiency of installation and fixation of the guide member 12.

In the embodiments of this application, an end of the discharge channel 120 is covered with a protective layer 123. During normal use of the battery 10, the protective layer 123 can keep the discharge channel 120 relatively sealed, reducing the impact of the exterior of the case 11 on the discharge channel 120 and improving the stability of the discharge channel 120. The end of the discharge channel 120 is the exit area of emissions in the discharge channel 120, and emissions are discharged from the case 11 through the end of the discharge channel 120.

In some embodiments, the protective layer 123 is connected to the guide member 12. For example, as shown in FIGs. 4, 8, and 9, the guide member 12 of the embodiment of this application may include the end of the discharge channel 120, and the protective layer 123 can be connected to the guide member 12 to facilitate installation and improve the stability of the protective layer 123.

In some embodiments, the protective layer 123 is connected to the case wall 113. For example, as shown in FIGs. 5 and 7, the case wall 113 is provided with a first through-hole 114, the first through-hole 114 may include the end of the discharge channel 120, and the protective layer 123 is disposed on the case wall 113 to facilitate installation.

It should be understood that the protective layer 123 of the embodiment of this application is configured to be destroyed by the emissions to discharge the emissions from the discharge channel 120, reducing obstruction by the protective layer 123 and improving the discharge efficiency of the emissions.

In the embodiments of this application, the destruction of the protective layer 123 may include at least a portion of the protective layer 123 rupturing, shattering, tearing, opening, or the like, to allow high-temperature and high-pressure emissions inside the discharge channel 120 to be discharged promptly. The manner in which the protective layer 123 is destroyed can also be flexibly configured according to actual applications.

For example, considering that emissions have high temperature and high pressure, the protective layer 123 may use pressure-sensitive or temperature-sensitive materials to allow the emissions to destroy the protective layer 123. Alternatively, the protective layer 123 may adopt a structure with lower strength or be provided with a localized weak area. For example, the protective layer 123 may have a score, so that the emissions can destroy the protective layer 123, for instance, destroying the protective layer 123 at the weak area.

In some embodiments, the material of the protective layer 123 of the embodiment of this application can be flexibly configured according to actual applications. For example, the material of the protective layer 123 is typically an insulating material. For another example, the material of the protective layer 123 may include at least one of the following: polypropylene (polypropylene, PP) and polyethylene glycol terephthalate (polyethylene glycol terephthalate, PET), and the embodiments of this application are not limited thereto.

It should be understood that one end of the discharge channel 120 of the embodiment of this application is disposed around the pressure relief mechanism 213, so that when thermal runaway occurs in the battery cell 20, emissions from the battery cell 20 can be discharged out of the battery cell 20 through the pressure relief mechanism 213 to directly enter the discharge channel 120, and then discharged to the exterior of the case 11 through the other end of the discharge channel 120, reducing the impact of the high-temperature and high-pressure emissions on other components inside the case 11. For example, considering that high-temperature and high-pressure emissions may include conductive particles, these particles may cause short circuits between multiple components inside the case 11, potentially leading to further fires or explosions. Discharging these emissions to the exterior of the case 11 can reduce further impact on the battery 10, lower the risk of explosion, and improve the reliability and stability of the battery 10.

Additionally, to reduce the impact of emissions discharged from the case 11 on other components outside the case 11 of the battery 10, the exterior of the battery 10 of the embodiment of this application may also be provided with other structures to further mitigate the impact of emissions.

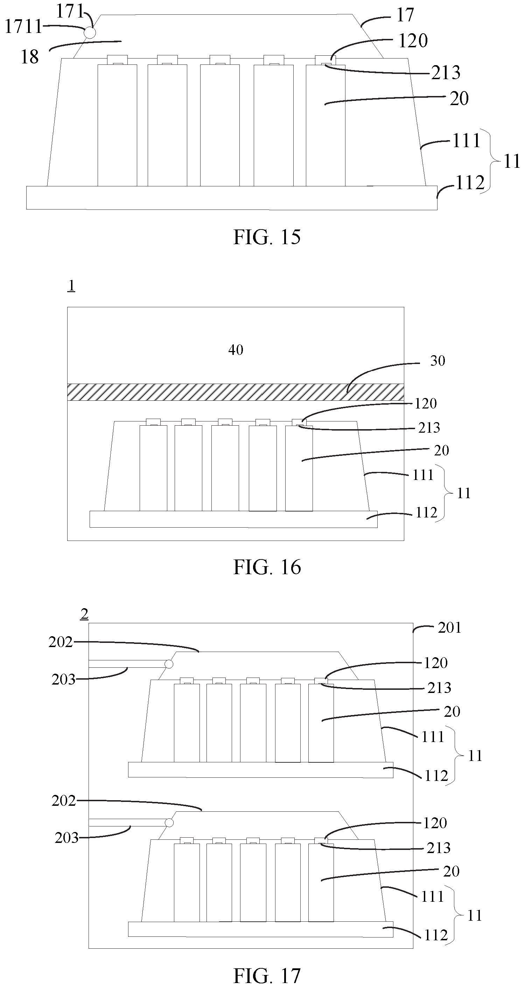

FIG. 15 illustrates a schematic diagram of another partial structure of a battery 10 according to an embodiment of this application. For example, the battery 10 shown in FIG. 15 may be another schematic diagram of the battery 10 shown in FIG. 1. As shown in FIG. 15, the battery 10 further includes a protective cover 17, the protective cover 17 being connected to the case 11 and forming a passage 18 with the case 11, the protective cover 17 being provided with a discharge port 171, and emissions discharged from the discharge channel 120 being discharged to an exterior of the battery 10 through the passage 18 and the discharge port 171. This can allow the position of the discharge port 171 to be reasonably set based on the actual application scenario of the battery 10, enabling directional discharge of emissions from the discharge port 171 and reducing the impact of emissions on other components outside the battery 10.

In some embodiments, a discharge valve 1711 is provided at the discharge port 171, and emissions discharged from the discharge channel 120 pass through the passage 18 and are discharged from the protective cover 17 through the discharge valve 1711.

In some embodiments, the passage 18 may be located between the case 11 and the protective cover 17. For example, the passage 18 may include a gap between the case 11 and the protective cover 17, requiring no additional structures to facilitate installation. Alternatively, the passage 18 may include a pipeline structure formed between the case 11 and the protective cover 17 to achieve directional discharge of emissions, and the embodiments of this application are not limited thereto.

It should be understood that the fixing method of the protective cover 17 and the case 11 of the embodiment of this application can be flexibly configured according to actual applications. In some embodiments, the protective cover 17 may be connected to the case 11 in a sealed manner. Further, a sealing gasket may be added in the connection area between the protective cover 17 and the case 11 to enhance the sealing performance between the protective cover 17 and the case 11. In some embodiments, the protective cover 17 may also be detachably connected to the case 11 to facilitate installation and maintenance. For example, the protective cover 17 and the case 11 may be connected by bolts or rivets, and the embodiments of this application are not limited thereto.

It should be understood that the technical solutions described in the embodiments of this application are applicable to various electric devices using the battery 10.

The electric device of the embodiments of this application may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, or an extended-range vehicle. The spacecraft includes an airplane, a rocket, a space shuttle, a spaceship, or the like. The electric toy includes a fixed or mobile electric toy, for example, a game console, an electric car toy, an electric ship toy, an electric airplane toy, or the like. The electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, an electric planer, or the like. The embodiments of this application do not impose specific limitations on the above electric devices.

For convenience of description, the following embodiments take the electric device as a vehicle as an example.

For example, FIG. 16 illustrates a schematic diagram of a partial structure of a vehicle 1 according to an embodiment of this application. The vehicle 1 may be a fuel vehicle, a gas vehicle, or a new energy vehicle, and the new energy vehicle may be a pure electric vehicle, a hybrid vehicle, or an extended-range vehicle. The interior of the vehicle 1 may be provided with a motor, a controller, and a battery 10, the controller being configured to control the battery 10 to supply power to the motor. For example, the battery 10 may be disposed at the bottom, front, or rear of the vehicle 1. The battery 10 may be used to supply power to the vehicle 1. For example, the battery 10 may serve as an operating power source for the vehicle 1, used for the electrical system of the vehicle 1, for example, for the power requirements during starting, navigation, and operation of the vehicle 1. In another embodiment of this application, the battery 10 may not only serve as an operating power source for the vehicle 1 but also as a driving power source for the vehicle 1, replacing or partially replacing fuel or natural gas to provide driving power for the vehicle 1.

In some embodiments, the other end of the discharge channel 120 is configured to discharge emissions towards a bottom of the vehicle 1. Specifically, when the battery 10 is installed on the vehicle 1, the end of the discharge channel 120 of the battery 10 can be configured to face the bottom of the vehicle 1, away from a passenger compartment 40 of the vehicle, so that emissions discharged from the discharge channel of the battery 10 are directed towards the bottom of the vehicle 1, away from the passenger compartment 40, reducing the impact of emissions on the passenger compartment 40 and improving the reliability of the vehicle 1.

In some embodiments, a blocking member 30 is disposed between the case 11 and the vehicle 1, the blocking member 30 being disposed between an outlet of the discharge channel 120 and the passenger compartment 40 of the vehicle 1. To further reduce the impact of emissions on the vehicle 1, a blocking member 30 can be disposed between the battery 10 and the vehicle 1, so that even if the outlet of the discharge channel 120 of the battery 10 faces or is close to the passenger compartment 40 of the vehicle 1, or the battery 10 does not have a protective cover 17, the blocking member 30 can be used to block emissions discharged through the discharge channel 120, reducing the impact of emissions on the passenger compartment 40 and improving the reliability of the vehicle 1.

FIG. 17 illustrates a schematic diagram of a structure of an energy storage device 2 according to an embodiment of this application. As shown in FIG. 17, the energy storage device 2 of the embodiment of this application may include a plurality of batteries 10, the energy storage device 2 being configured to store a plurality of batteries 10. Specifically, the energy storage device 2 may include an electrical cabinet or an energy storage container, the energy storage device 2 being configured to store, manage, and transport a plurality of batteries 10, and to perform unified management and control of the plurality of batteries 10, for example, charging the plurality of batteries 10.

In the embodiments of this application, the interior of the energy storage device 2 is a hollow structure, and the hollow structure can be divided into a plurality of functional compartments according to actual requirements. For example, the energy storage device 2 may include an energy storage compartment, a thermal management compartment, and a control compartment. The energy storage compartment may be configured to accommodate energy storage components to provide electrical energy, for example, to store a plurality of batteries 10. The thermal management compartment may be configured to accommodate thermal management components to regulate the temperature of the batteries 10 inside the energy storage device 2. The control compartment may be configured to accommodate a control box to manage or assist in the operation of components in the energy storage device 2.

In some embodiments, the positions of the energy storage compartment, thermal management compartment, and control compartment in the energy storage device 2 can be configured according to actual applications. For example, the energy storage compartment may be disposed on the right side of the energy storage device 2, and the thermal management compartment and control compartment may be respectively disposed on the left side along the height direction of the energy storage device 2, for example, the thermal management compartment being disposed above the control compartment. Alternatively, other different configurations may be adopted.

In some embodiments, the energy storage device 2 may include: a cabinet 201, the cabinet 201 being configured to accommodate a plurality of batteries 10. When thermal runaway occurs in a battery cell 20 of any battery 10, emissions from the battery cell 20 can be discharged from the case 11 of the battery 10 through the discharge channel 120 and enter the cabinet. Further, the cabinet 201 may be provided with a discharge port, and emissions entering the cabinet can be discharged from the cabinet 201 through the discharge port, reducing the accumulation of emissions inside the cabinet 201 and thereby reducing the impact of these emissions on other batteries 10 inside the cabinet 201.

In some embodiments, a discharge pipeline 203 may also be disposed inside the cabinet 201, the discharge pipeline 203 being connected to the discharge channel 120, for example, one end of the discharge pipeline 203 being connected to the discharge channel 120, and the other end of the discharge pipeline 203 being in communication with an exterior of the cabinet 201. Specifically, when thermal runaway occurs in a battery cell 20 of any battery 10, emissions from the battery cell 20 can be discharged from the case 11 of the battery 10 through the discharge channel 120, enter the discharge pipeline 203, and then be discharged to the exterior of the cabinet 201 through the discharge pipeline 203. Since emissions can be discharged to the exterior of the cabinet 201 through the discharge channel 120 and the discharge pipeline 203, respectively, the impact of these emissions on other batteries 10 inside the cabinet 201 can be reduced, lowering the risk of thermal propagation between multiple batteries 10.

It should be understood that the discharge pipeline 203 of the embodiment of this application may correspond to at least one discharge channel 120. For example, the discharge pipeline 203 may correspond one-to-one with the discharge channel 120 to reduce mutual interference between different discharge channels 120, thereby reducing mutual interference between different battery cells 20 and lowering the risk of thermal propagation. For another example, each discharge pipeline 203 may correspond to a plurality of discharge channels 120 to reduce the number of discharge pipelines 203, lowering structural complexity and facilitating processing and installation.

In some embodiments, as shown in FIG. 17, the energy storage device 2 includes: a cabinet 201, the cabinet 201 being configured to accommodate a plurality of batteries 10, a protective cover 202 and a discharge pipeline 203 being disposed outside the case 11, one end of the discharge pipeline 203 being connected to the protective cover 202, the other end of the discharge pipeline 203 being in communication with an exterior of the cabinet 201, the discharge pipeline 203 being in communication with the discharge channel 120, and the discharge pipeline 203 being configured to discharge emissions discharged from the discharge channel 120 to the exterior of the cabinet 201. If thermal runaway occurs in a battery 10 within the energy storage device 2, emissions discharged from the discharge channel 120 of the battery 10 can enter the protective cover 202 of the battery 10 and be discharged from the cabinet 201 through the discharge pipeline 203, reducing the impact of emissions on other batteries 10 in the energy storage device 2 and improving the structural stability and reliability of the energy storage device 2.

Although this application has been described with reference to preferred embodiments, various improvements can be made thereto, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery, comprising:
a case (11);
a battery cell (20) accommodated in the case (11), the battery cell (20) being provided with a pressure relief mechanism (213); and
a discharge channel (120), one end of the discharge channel (120) being disposed around the pressure relief mechanism (213), and the discharge channel (120) being configured to discharge emissions discharged from the pressure relief mechanism (213) to an exterior of the case (11) through the other end of the discharge channel (120).

2. The battery according to claim 1, wherein the discharge channel (120) is not in communication with an internal space of the battery.

3. The battery according to claim 1 or 2, further comprising a guide member (12), wherein:
the discharge channel (120) is disposed on the guide member;
the pressure relief mechanism (213) is located on a first wall (210) of the battery cell (20), the first wall (210) facing towards a case wall (113) of the case (11); and
at least a portion of the guide member (12) is located between the first wall (210) and the case wall (113).

4. The battery according to claim 3, wherein the case wall (113) is provided with a first through-hole (114), and the guide member (12) penetrates the case wall (113) through the first through-hole (114).

5. The battery according to claim 3 or 4, wherein the guide member (12) is connected to the case wall (113) in a sealed manner.

6. The battery according to any one of claims 3 to 5, wherein the guide member (12) is detachably connected to the case wall (113).

7. The battery according to claim 6, wherein the guide member (12) is connected to the case wall (113) through a snap-fit structure (13).

8. The battery according to claim 7, wherein the snap-fit structure (13) comprises a first protruding structure (131) and a second protruding structure (132) that protrude from an outer periphery of the guide member (12), and the case wall (113) is disposed between the first protruding structure (131) and the second protruding structure (132).

9. The battery according to claim 8, wherein the snap-fit structure (13) comprises a pressure ring (133) disposed around a circumference of the guide member (12) and located between the second protruding structure (132) and the case wall (113).

10. The battery according to claim 9, wherein the pressure ring (133) has a notch (1331), the notch (1331) being configured to allow the pressure ring (133) to be sleeved onto the outer periphery of the guide member (12) through the notch (1331).

11. The battery according to claim 9 or 10, wherein an orthographic projection of the second protruding structure (132) along a first direction does not overlap with an orthographic projection of the case wall (113) along the first direction, the first direction being a thickness direction of the first wall (210).

12. The battery according to any one of claims 8 to 11, wherein a first sealing gasket (134) is disposed between the first protruding structure (131) and the case wall (113).

13. The battery according to any one of claims 8 to 12, wherein the first protruding structure (131) is located inside the case (11), and the second protruding structure (132) is located outside the case (11).

14. The battery according to claim 3, wherein the guide member (12) and the case wall (113) are integrally formed.

15. The battery according to any one of claims 1 to 14, further comprising an insulating plate (14), wherein:
the insulating plate (14) is located between a first wall (210) of the battery cell (20) and a case wall (113) of the case (11);
the discharge channel (120) penetrates the insulating plate (14); and
the first wall (210) is provided with the pressure relief mechanism (213).

16. The battery according to any one of claims 3 to 14, further comprising an insulating plate (14), wherein:
the insulating plate (14) is located between the first wall (210) and the case wall (113), and the discharge channel (120) penetrates the insulating plate (14);
the insulating plate (14) and the guide member (12) are integrally formed; or
the insulating plate (14) and the guide member (12) are separately provided, the insulating plate (14) being provided with a second through-hole (141), and the guide member (12) penetrating the insulating plate (14) through the second through-hole (141).

17. The battery according to claim 15 or 16, further comprising a busbar component (16), wherein the busbar component (16) is electrically connected to an electrode terminal (214) disposed on the first wall (210) of the battery cell (20), and the insulating plate (14) is configured to support the busbar component (16).

18. The battery according to any one of claims 3 to 14, wherein an end of the guide member (12) facing towards the first wall (210) abuts the first wall (210), and a second sealing gasket (121) is disposed between the guide member (12) and the first wall (210).

19. The battery according to any one of claims 3 to 14, wherein the guide member (12) and the first wall (210) are integrally formed.

20. The battery according to any one of claims 3 to 14, wherein:
the first wall (210) is provided with a pressure relief hole (215);
the pressure relief mechanism (213) covers the pressure relief hole (215);
the first wall (210) is provided with a third protruding structure (216) around the pressure relief hole (215); and
the guide member (12) is disposed around an outer side of the third protruding structure (216).

21. The battery according to any one of claims 1 to 20, wherein an end of the discharge channel (120) is covered with a protective layer (123).

22. The battery according to any one of claims 3 to 14, wherein an end of the discharge channel (120) is covered with a protective layer (123), and the protective layer (123) is connected to the guide member (12).

23. The battery according to claim 21 or 22, wherein the protective layer (123) is configured to be destroyed by the emissions to discharge the emissions from the discharge channel (120).

24. The battery according to any one of claims 1 to 23, comprising a plurality of the battery cells (20), wherein one discharge channel (120) is disposed corresponding to pressure relief mechanisms (213) of the plurality of battery cells (20).

25. The battery according to any one of claims 1 to 23, comprising a plurality of the battery cells (20) and a plurality of discharge channels (120), wherein pressure relief mechanisms (213) of the plurality of battery cells (20) correspond one-to-one with the plurality of discharge channels (120).

26. The battery according to any one of claims 1 to 25, wherein the case (11) comprises a first case portion (111) and a second case portion (112), the first case portion (111) and the second case portion (112) being connected to each other in a sealed manner.

27. The battery according to any one of claims 1 to 26, further comprising a protective cover (17), wherein:
the protective cover (17) is connected to the case (11) and forms a passage (18) with the case (11);
the protective cover (17) is provided with a discharge port (171); and
the emissions discharged from the discharge channel (120) is discharged to an exterior of the battery through the passage (18) and the discharge port (171).

28. An electric device, comprising the battery according to any one of claims 1 to 27, the battery being configured to supply power to the electric device.

29. The electric device according to claim 28, being a vehicle, wherein:
the other end of the discharge channel (120) is configured to discharge the emissions towards a bottom of the vehicle, and/or
a blocking member (30) is disposed between the case (11) and the vehicle, the blocking member (30) being disposed between an outlet of the discharge channel (120) and a passenger compartment (40) of the vehicle.

30. An energy storage device, comprising a plurality of batteries, the batteries being the battery according to any one of claims 1 to 27, and the energy storage device being configured to store the plurality of batteries.

31. The energy storage device according to claim 30, further comprising a cabinet (201), wherein:
the cabinet (201) is configured to accommodate the plurality of batteries; and
a protective cover (202) and a discharge pipeline (203) are disposed outside the case (11), wherein:
one end of the discharge pipeline (203) is connected to the protective cover (202), and the other end of the discharge pipeline (203) is in communication with an exterior of the cabinet (201); and
the discharge pipeline (203) is in communication with the discharge channel (120) and is configured to discharge emissions discharged from the discharge channel (120) to the exterior of the cabinet (201).
